# EUROPÄISCHE PATENTSCHRIFT

(11) **EP 0 287 091 B1**
(45) Veröffentlichungstag und Bekanntmachung des Hinweises auf die Patenterteilung: **26.01.1994**
(21) Anmeldenummer: 88105939.8
(22) Anmeldetag: 14.04.1988
(51) Int. Cl.: C09D 5/44, C08G 18/64, C09D 163/00

(54) **Wässriges Überzugsmittel, Verfahren zu dessen Herstellung und dessen Verwendung zum elektrophoretischen Beschichten**
Aqueous coating, its preparation process and its use in the coating by electrophoresis
Produit de revêtement aqueux, sa préparation et son utilisation dans le revêtement par électrophorèse

(30) Priorität: 15.04.1987 DE 3712805
(43) Veröffentlichungstag der Anmeldung: 19.10.1988
(73) Patentinhaber: Herberts Gesellschaft mit beschränkter Haftung, 42285 Wuppertal (DE)
(72) Erfinder: Patzschke, Hans-Peter, Dr., D-5600 Wuppertal 2 (DE); Goebel, Armin, Dipl.-Ing., D-5600 Wuppertal 2 (DE)
(74) Vertreter: Türk, Gille, Hrabal, Leifert

(56) Entgegenhaltungen:
- EP-A- 0 183 025
- FR-A- 2 445 354
- US-A- 4 017 438

## Beschreibung

Die Erfindung betrifft ein wäßriges Überzugsmittel, das ein durch Protonisieren mit Säuren wasserverdünnbares organisches Kunstharz-Bindemittel, enthaltend eine organische Aminogruppen und Hydroxylgruppen enthaltende Kunstharzkomponente und Vernetzungsmittel, sowie gegebenenfalls Vernetzungskatalysatoren und gegebenenfalls Pigmente, Füllstoffe, Korrosionsinhibitoren bzw. Korrosionsschutzmittel, übliche Lackhilfsmittel, sowie gegebenenfalls in einer Menge bis zu 10 Gew.-%, bezogen auf das Gesamtgewicht des Überzugsmittels, organische Lösemittel enthält.

Die Herstellung von Überzügen durch Abscheiden von filmbildenden Materialien auf elektrisch leitenden Substraten unter Einfluß einer angelegten Spannung ist bekannt und findet aus Qualitäts- und Rationalisierungsgründen immer stärkere Verbreitung in der Technik. Die dabei eingesetzten wasserverdünnbaren Lacke werden als Elektrophoreselacke oder EC-Lacke bezeichnet. Sie zeichnen sich durch hohen Umgriff und sehr guten Korrosionsschutz bei dünnen Schichten aus und werden in der Praxis aus Epoxidharzen auf Basis Bisphenol A und Aminen und/oder Aminoalkoholen hergestellt. Die Wasserlöslichkeit wird dabei mindestens anteilweise durch Salzbildung an tertären Aminogruppen erzielt. Dadurch bleibt im eingebrannten Film eine basische Gruppe erhalten, die bei entsprechender Feuchtraumbelastung zu Qualitätseinbußen führen kann.

So wird in der DE-A-33 36 749 = EP 137 459 ein epoxidgruppenfreies, harnstoffgruppenhaltiges Amino-Epoxidhers hergestellt durch Kettenverlängerung eines Epoxidgruppen enthaltendes Amino-Epoxidharz mit einem zwei Aminogruppen enthaltendem Amid- oder Harnstoff-Derivat und mit umesterungs fähigen Vernetzungsmitteln kombiniert. Die dabei erkennbaren Tendenzen zur Verbesserung der Zwischenschichthaftung und der Steinschlagfestigkeit sind jedoch für die heute gesteigerten Anforderungen nicht ausreichend. Die im Harzsystem enthaltenden tert. Aminogruppen brauchen für die Löslichkeit einen pH-Wert von 5 bis 6.

Kunstharze mit reaktiven Aminogruppen Können aus Epoxidgruppen tragenden Harzen im allgemeinen nach zwei Verfahren hergestellt werden, und zwar durch Umsetzung mit Polyaminoketiminen oder mit Polyaminen im Überschuß.

In der DE-A- 22 52 536 und DE-A-22 65 195 werden Aminoepoxidharze beschrieben, die durch Umsetzung von Epoxidharzen mit Polyaminen entstehen, die außer mindestens einer sekundären Aminogruppe noch zusätzlich durch Ketimingruppen latent geschützte, primäre Aminogruppen enthalten.

Die Harze werden zur thermischen Vernetzung der Filme entweder mit blockierten Polyisocyanaten gemischt oder mit teilweise blockierten Polyisocyanaten zu einem selbstvernetzenden Bindemittel umgesetzt. Aufgrund dieser Herstellungsweise liegt nach dem Einbrennen der Lackschicht mindestens eine tertiäre Aminogruppe pro Molekül vor, die die Filmeigenschaften negativ beeinflussen kann. Um störende Nebenreaktionen zu vermeiden, muß stets von frisch hergestelltem Ketimin ausgegangen, und unbedingt wasserfreie Reaktionsbedingungen eingehalten werden.

In der DE-A-31 09 282 werden isocyanatreaktive funktionelle Gruppen eines Epoxidharzes (Komponente A) mit einer vorwiegend aliphatischen Polyaminoverbindung (Komponente B) , deren primäre Aminogruppen in Ketiminogruppen umgewandelt wurden, über ein Diisocyanat (Komponente C) zu einem Harz vom Typ A-C-B verknüpft. Es werden dabei zahlreiche Nebenprodukte gebildet, die unterschiedliche Eigenschaften haben und daher eine einheitliche elektrophoretische Abscheidung beeinträchtigen.

In der DE 33 25 061 und DE 35 19 935 werden Epoxidharze mit primären Diaminen umgesetzt, deren Aminogruppen durch Katimingruppen geschützt sind. Eine Kettenverlängerung über die sekundären Aminogruppen wird nicht beschrieben. Die entstehenden Produkte sind uneinheitlich.

In der EP-4090 werden aminogruppenhaltige Harze hergestellt, die bei einer Aminzahl von 30 - 150 mindestens 1/3 primäre und/oder sekundäre Aminogruppen enthalten und mit Vernetzungsmitteln umgesetzt werden, die reaktive Estergruppen enthalten. Die Herstellung der Harze erfolgt durch Reaktion von Epoxidharzen mit einem Epoxidäquivalentgewicht von 500 bis 2 000 mit überschüssigem Polyamin, das abdestilliert wird. Aufgrund der hohen Harzviskosität treten bei der Destillation starke Schaumprobleme auf, wodurch ein vollständiges Entfernen der nicht umgesetzten Polyamine unmöglich wird.

In der DE-A- 27 37 375 wird die Umsetzung von Epoxidharzen mit einem Epoxidäquivalentgewicht von 400 bis 4 000 mit überschüssigen Polyaminen, die mindestens zwei Amin-Stickstoff-Atome und mindestens drei Amin-Wasserstoffatome pro Molekül enthalten, beschrieben und das nicht umgesetzte Polyamin abdestilliert. Zur Steuerung der Aminzahl und der Elastizität wird das Molekül mit Monocarbonsäure oder Monoepoxiden modifiziert. Die Vernetzung erfolgt mit Formaldehyd-Kondensations-Harzen.
In der EP-189 727 und EP-189 729 wird das Epoxidharz mit Polyalkoholen zusätzlich modifiziert und mit blockierten Polyisocyanaten vernetzt. Nach diesem Verfahren erhält man dunkelgelb bis braun gefärbte Kunetharze, die noch 3 000 bis 20 000 ppm unumgesetztes Polyamin enthalten. Man erhält Filme, deren Korrosionsschutz den steigenden Ansprüchen nicht mehr genügt.

In der US-PS 3 963 663 wird ein Urethangruppen enthaltendes Aminoepoxidharz, das bevorzugt mit primären Diaminen auf Basis Polypropylenglykol (=Jeffamin 400) hergestellt wird, mit Phenolharzen vernetzt. Die Urethangruppen werden durch Reaktion von Diisocyanaten mit Hydroxygruppen höhermolekularer Epoxidharze eingeführt. Laut Beispiel wird ein brauchbares Produkt nur mit hochmolekularen, Ethergruppen enthaltenden Diaminen erhalten,weil ein möglicherweise abzudestillierender Aminüberschuß wegen der hohen Harzviskositäten nicht vollständig entfernt werden kann, und die Lackeigenschaften benachteiligt werden.

Die FR-A-2 445 354 beschreibt kationische wäßrige Überzugsmittel, die als Filmbildner das Reaktionsprodukt aus einem gegebenenfalls mit primärem oder sekundärem Amin modifizierten Epoxidharz, einem Kondensationsprodukt aus maleinisierter Fettsäure und Polyamin und einem teilweise blockierten Polyisocyanat enthalten.

Die Marktanforderungen an die Eigenschaften von kataphoretisch abscheidbaren Überzugsmitteln werden laufend gesteigert durch Senken des Lösemittelgehaltes und der Einbrenntemperaturen bei Erhalt der Umgriffs- und Korrosionsschutzeigenschaften.Besonderer Wert wird heute auf eine erhöhte Steinschlagfestigkeit und bessere Zwischenhaftungseigenschaften gelegt.

Der Erfindung liegt die Aufgabe zugrunde, kathodisch abscheidbare, wäßrige Elektrotauchlacküberzugsmittel zu finden, die den vorstehenden Anforderungen genügen und gegenüber den bekannten Überzugsmitteln Verbesserungen hinsichtlich der oben beschriebenen Nachteile zeigen.

Es wurde nun überraschenderweise gefunden, daß diese Aufgabenstellung durch Überzugsmittel gelöst werden kann, deren Herstellung über niedrigmolekulare, substituierte Aminoepoxidharze mit primären Aminogruppen verläuft, von denen der Polyaminüberschuß leicht abdestillierbar ist und die anschließend in geeigneter Weise mit Diisocyanaten umgesetzt und mit Vernetzungsmitteln, insbesondere blockierten Polyisocyanaten, abgemischt werden. Diese Überzugsmittel führen nach dem Einbrennen der daraus durch elektrophoretische Abscheidung erhaltenen Grundierungen zu Filmen mit besonders guten Eigenschaften. Als weiterer Vorteil ergibt sich die Möglichkeit gleichmäßig elektrophoretisch abzuscheiden, ohne daß sich Anreicherungen unerwünschter Harzbestandteile im Elektrophoresebad ergeben.

Die Herstellung des nach Protonisieren mit Säuren wasserverdünnbaren Harnstoffgruppen enthaltenden Aminoepoxidharzes (Komponente A) mit überwiegend primären Aminogruppen geschieht ausgehend von:
- AI: 90 bis 40 Gew.-% mit nicht oder schwer verseifbaren Alkyl- oder Alkylarlyresten modifizierten Epoxidharz-Polyamin-Addukten mit mindestens einer primären und mindestens einer sekundären Aminogruppe pro Molekül, deren primäre Aminogruppen zunächst in einem Carbonylgruppen, bevorzugt Ketongruppen, enthaltenden Lösemittel unter azeotropem Auskreisen von Wasser bei Temperaturen von 30 bis 200°C, bevorzugt 50 bis 120°C, zu den entsprechenden Aldimin- oder Ketimingruppen umgesetzt werden, worauf dann mit
- AII: 10 bis 60 Gew.-% Polyisocyanaten oder isocyanatgruppenhaltigen Prepolymeren umgesetzt wird, wobei eine Molekülvergrößerung vorwiegend über die sekundären Aminogruppen erfolgt, mit anschließender Hydrolyse der Aldimin- bzw. Ketimingruppen.

Bevorzugt werden 85 bis 50 Gew.-% der Komponente AI mit 15 bis 50 Gew.-% der Komponente AII in aprotischen Lösemitteln umgesetzt. Als Komponenten AII werden Diisocyanate bevorzugt. Es werden zweckmäßig ungefähr x Mol Diisocyanat mit (x + 1) Mol Aminoepoxidharz (Komponente AI) umgesetzt, wobei x = 1 bis 6, bevorzugt 1 bis 2, beträgt. Durch die bevorzugte Umsetzung der Isocyanatgruppen mit der sekundären Aminogruppe unter Harnstoffbildung wird eine Molekülvergrößerung angestrebt. Aufgrund dieser Reaktion verringert sich gleichzeitig der Gehalt von niedermolekularen Aminen und verbessert sich das elektrophoretische Abscheidungsverhalten. Zum Einsteuern von Aminozahl und Viskosität kann von den idealen Molverhältnissen abgewichen werden. Setzt man weniger Diisocyanat ein, so entsteht ein niedriger viskoses Produkt mit höherer Aminzahl. Erhöht man die Diisocyanatmenge, so steigert sich die Molmasse durch Reaktion weiterer Isocyanatgruppen mit den Hydroxylgruppen der Komponente AI; die Obergrenze des Isocyanatzusatzes wird zweckmäßig so gewählt, daß die Gefahr einer Gelierung vermieden wird. Einen ähnlichen Effekt erreicht man auch durch anteilweisen Ersatz des Diisocyanats durch Triisocyanat.

Das Aminoepoxidharz (Komponente A) enthält mindestens eine primäre Aminogruppe und mindestens eine Harnstoffgruppe pro Molekül und hat eine Aminzahl von 30 bis 170, bevorzugt von 50 bis 100 (mg KOH pro g Festharz) entsprechend 0,5 bis 3,0, bevorzugt 0,7 bis 1,8 Milliäquivalente kationischer Gruppen pro g Festharz und einer mittleren Molmasse von 700 bis 10.000, bevorzugt 950 bis 4.000. Ist die Aminzahl zu niedrig, so ist die Löslichkeit zu gering oder es entstehen durch einen zu hohen Neutralisationsgrad zu saure pH-Werte in den Abscheidungsbädern.

Ist die Aminzahl zu hoch, so haftet der abgeschfedene Film schlecht oder es entsteht eine unruhige Oberfläche unterschiedlicher Schichtstärke.

Für die später ablaufenden Vernetzungsreaktionen des Aminoepoxidharzes (Komponente A) ist nicht nur die Zahl der im Harz vorhandenen sekundären und primären Aminogruppen maßgebend, sondern auch die im Molekül vorhandenen Hydroxylgruppen, So sollte das Harnstoffgruppen enthaltende Aminoepoxidharz 2 bis 6, bevorzugt etwa 4 Hydroxylgruppen im Molekül enthalten. Das entspricht einer Hydroxylzahl von 35 bis 250, bevorzugt 100 bis 180, bzw. 0,6 bis 4,5, bevorzugt 1,8 bis 3,2 Milliäquivalenten Hydroxylgruppen pro g Festharz. Sind Amin- und Hydroxylzahl zu niedrig, so entstehen bei der Vernetzung Filme, die noch in organischen Lösemitteln, wie Aceton, oder Methylethylketon löslich beziehungsweise anquellbar sind. ISt die Amin- und Hydroxylzahl dagegen zu hoch, so wird der Film zu spröde und bleibt evtl. auch zu hydrohpil. Im Molekül müssen mindestens zwei vernetzungsfähige Amino- oder Hydroxylgruppen vorhanden sein.

Geht man bei der Umsetzung der Komponente AI mit AII stufenweise vor, so verringert man die Gelierungstendenz und erhält besonders gut lösliche Produkte. Vorzugsweise werden dabei
1. zuerst aus der Komponente AI mit Carbonylgruppen, insbesondere mit Ketogruppen enthaltenden Lösemitteln bei Temperaturen von 30 bis 160°C, bevorzugt 50 bis 110°C, etwa 0,8 bis 1,2, bevorzugt 0,9 bis 1,1 Mol Wasser pro primärer Aminogruppe abdestilliert, und
2. dann wird das erhaltene Imin, z.B. das Ketimin des substituierten Epoxidharz-Polyamin-Adduktes unter Ausschluß von Wasser mit Polyisocyanaten bei Temperaturen unter 100°C, bevorzugt von 55 bis 70°C umgesetzt. Hierbei wird als Lösemittel das in der vorausgehenden Stufe verwendete Carbonylgruppen enthaltende Lösemittel weiterverwertet, so daß eine Isolierung des Imins nicht nötig ist. Eine Reaktion der verkappten primären Amine mit der Isocyanatgruppe wird so weitgehend vermieden. Außerdem sollen keine die Ketiminbildung zersetzenden Substanzen, wie Wasser, während der Reaktion vorhanden sein.Der Reaktionsablauf ist nicht so kritisch, weil im Gegensatz zum Stand der Technik bei der Hydrolyse keine niedrigmolekularen Verbindungen entstehen.

Carbonylgruppen enthaltende Lösemittel sind Ketone und Aldehyde mit einer Molmasse von 58 bis 150, Ketone werden aufgrund ihres angenehmeren Geruchs bevorzugt. Geeignete Ketone sind solche, deren organische Reste sich gegenüber den Ketiminbindungen inert verhalten, das Reaktionswasser azeotrop auskreisen und deren Substituenten eine möglichst kleine sterische Hinderung bewirken. Geeignete Ketone sind Methylethylketon, Diethylketon, Ethyl-n-propylketon, Methylisobutylketon, Dibutylketon, Cyclopentanon, Cyclohexanon, Isophoron oder Acetophenon. Im allgemeinen wird Methylisobutylketon bevorzugt. Die Reaktionsbedingungen (Reaktionstemperatur, Ketonüberschuß, Auswahl des Lösemittels, saurer oder basischer Katalysator) werden zweckmäßig so gewählt, daß möglichst alle primären Aminogruppen ohne zusätzliche Aldolkondensation in ein Aldimin bzw. Ketimin verwandelt werden. Das Verhältnis von primären Aminogruppen zu Aldehyden bzw. Ketonen beträgt 1:1,1 bis 1:5, zweckmäßig 1;1,3 bis 1:3 und kann gegebenenfalls durch Säuren oder ihre Salze katalysiert werden. Zur besseren Abtrennung des Wassers können der Lösung bzw. dem Abscheider zusätzlich aliphatische oder aromatische Kohlenwasserstoffe zugesetzt werden. Der chemische Aufbau des Harnstoffgruppen enthaltenden Aminoepoxidharzes (Komponente A) und seiner Eigenschaften können im weiten Umfang variiert werden, beispielsweise durch
- die Auswahl der monofunktionellen Modifizierungskomponente und der Polyamine,
- die Anzahl der Amin- und Hydroxylgruppen,
- die Molmasse und das Molverhältnis der Komponenten AI und AII,
- die unterschiedliche Funktionalität der Epoxidgruppen und der Isocyanatgruppen tragenden Verbindungen,
- das Verhältnis von harten und weichen Molekülsegmenten.

Ferner kann eine Modifizierung bzw. Beeinflussung der Eigenschaften der erhaltenen Überzuge durch das später zu verwendende Vernetzungsmittel (Komponente B) für die Komponente A erzielt werden.

Das Epoxidharz-Polyamin-Addukt (Komponente AI)kann generell durch folgendes Formelschema vereinfacht dargestellt werden:

(1) H₂N-R' -NH-C(X-R)ₘ

wobei Rʹ der gegebenenfalls durch sekundäre Aminogruppen substituierte Kohlenwasserstoffrest eines Polyamins, C der Rest eines Polyepoxidharzes und R ein monofunktioneller Alkyl- oder Alkylarlyrest bedeuten, der über eine nicht oder schwer verseifbare Gruppe X mit dem epoxidgruppenhaltigen Harz C verbunden und m = 1 bis 3, vorzugsweise 1, ist. Die Herstellung dieses Epoxidharz-Amin-Adduktes erfolgt so, daß man zuerst das epoxidgruppenhaltige Harz mit der Modifizierungskomponente R-X-H defunktionalisiert und dann die restlichen Epoxidgruppen mit überschüssigen Polyaminen umsetzt.

Epoxidgruppenhaltige Harze mit vorzugsweise endständigen 1,2-Epoxidgruppen sind Polyglycidylether, Polyglycidylamine oder epoxidgruppenhaltige Poly-Kohlenwasserstoffe, die zweckmäßig keine Hydroxylgruppen enthalten, mit einer mittleren Molmasse von 140 - 1.000 und einem Epoxidäquivalentgewicht von etwa 70 bis 500. Es können 1,5 bis 8, bevorzugt 1,8 bis 3 Epoxidgruppen pro Molekül vorhanden sein. Geeignete Polyepoxidharze sind beispielsweise Verbindungen der allgemeinen Formel 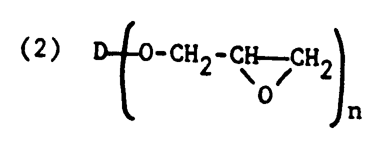
in welcher
D für den Rest eines mehrwertigen, bevorzugt zweiwertigen Alkohols, Phenols, Amins oder entsprechender heterocyclischer Verbindungen und
n für eine Zahl von 2 bis 6, vorzugsweise 2, steht und die auch als Gemische eingesetzt werden können.

Besonders bevorzugt werden verwendet Polyglycidylether, die etwa zwei 1.2-Epoxidgruppen pro Molekül enthalten, mit einer mittleren Molmasse von etwa 300 bis 500 und einem Epoxidäquivalentgewicht von etwa 170 bis 300, besonders 180 bis 250. Es handelt sich hierbei bevorzugt um flüssige Produkte. Sie werden beispielsweise hergestellt durch Reaktion von Epihalogenhydrinen bzw. Methylepihalogenhydrinen, bevorzugt Epichlorhydrin mit zweiwertigen Phenolen, wobei durch Auswahl der Molverhältnisse und Zusatz geeigneter basischer Katalysatoren, wie Ammonium- oder Phosphoniumsalzen die Molmasse eingestellt werden kann. Unter die Formel (2) fallen z.B. Harze der folgenden Formel: 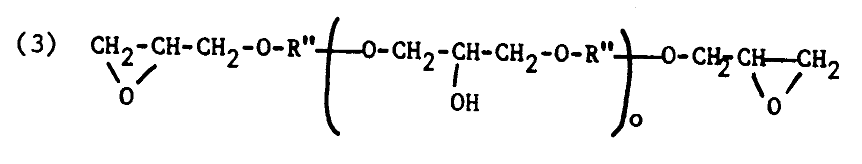
wobei o = 0 bis 2 und R'' bevorzugt der Rest eines Bisphenols folgender Struktur ist: 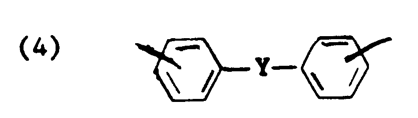
wobei Y = -CH₂-, -C(CH₃)₂-, -CO-, -S-, -SO-, -SO₂-, -C(CCl₃)₂- ist. Die Aromatenringe können gegebenenfalls durch Halogene oder Alkylgruppen substituiert sein.

Typische zweiwertige Phenole sind Hydrochinon, Resorcin, 1.5-Dihydroxynaphthalin, p.p'-Dihydroxydiphenylpropan, p.p'-Dihydroxybenzophenon, p.p'-Dihydroxydiphenylmethan, p.p'-Dihydroxydiphenylethan, p.p'-Dihydroxydi-tertiärbutylphenylpropan oder Bis(2-hydroxynaphthyl)methan.

Bevorzugt werden technische Mischungen, wie von Dihydroxydiphenylpropanen, besonders die 4.4'-Isomeren mit geringen Anteilen an 2.2' oder 4.2'-Isomeren. Die beschriebenen Epoxidharze können auch vollständig oder teilweise hydriert sein, wie beispielsweise 1.4'-Bis(-2.3'-epoxy-propoxy)cyclohexan oder in Gemischen mit unterschiedlicher Struktur und Molmasse eingesetzt werden.

Diese beschriebenen Polyepoxidharze können gegebenenfalls anteilweise durch elastischere Modifikationen ersetzt werden. Sie entstehen auf Basis von zweiwertigen Phenolen, besonders Bisphenol , durch Umsetzung der Polyepoxidharze mit Polyalkoholen, bevorzugt langkettigen Dialkanolen HO-E-OH wie Butandiol-1.4 oder Hexandiol-1.6 in Gegenwart geeigneter Katalysatoren unter Bildung von 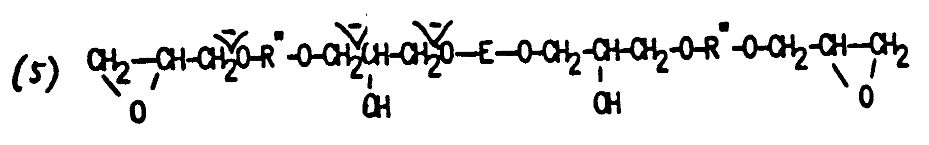
oder durch Umsetzung von mehrwertigen Phenolen mit Alkylenoxiden wie Ethylenoxid, Propylenoxid, Butylenoxid, Stearyloxid und anschließende Reaktion mit Epichlorhydrin unter Bildung von 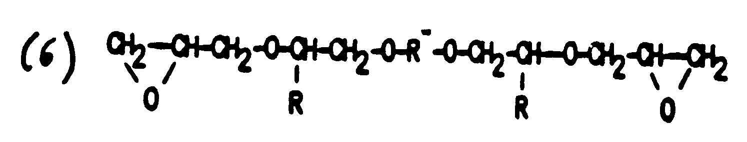
wobei R = Wasserstoff oder ein niederer Alkylrest, bevorzugt -CH₃ bedeutet und R'' wie vorstehend definiert ist.

Ebenfalls geeignet sind Polyglycidylether von mehrwertigen Alkoholen, die durch folgende allgemeine Formel gekennzeichnet sind, die von der vorstehenden allgemeinen Formel (2) umfaßt werden: 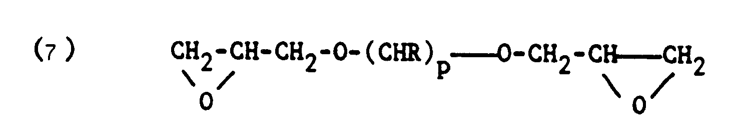
wobei R = Wasserstoff oder ein niedriger, gegebenenfalls mit verschiedenen Substituenten versehener Alkylrest, bevorzugt -CH₃ oder -C₂H₅ und p = 2 bis 15 ist. Typische Beispiele hierfür sind die Reaktionsprodukte von Epichlorhydrin und Ethylenglykol, 1.2- und 1.3-Propylenglykol, 1.2- und 1.4-Butandiol, 1.5-Pentadiol 2-Ethyl-hexandiol-1.6, aber auch Verbindungen wie 1.2.6-Hexantriol oder Bis-(4-hydroxycyclohexyl)-2.2-propan. Geeignete Polyglycidylether können aber auch der Formel 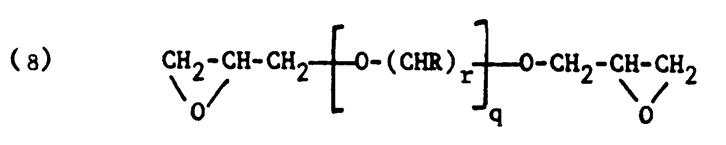
entsprechen, die ebenfalls unter die allgemeine Formel (2) fällt, wobei R dieselbe Bedeutung wie oben hat und r = 2 bis 6 und q = 1 bis 20 bedeuten. Typische Beispiele hierfür sind die Reaktionsprodukte von Epichlorhydrin und den aus Ethylenglykol, 1.2-Propylenglykol oder 1.2-Butylenglykol erhaltenen Polyethern, wie Polyethylenglykole, Polypropylenglykole oder Polybutylenglykole mit verschiedenen Molmassen.

Unter die Formel (2) fallen auch heterocyclische Polyepoxidverbindungen, die ebenfalls verwendet werden können, wie 1.3-Diglycidyl-5.5-dimethylhydantoin oder Triglycidylisocyanurat. Eine andere geeignete Klasse von Polyepoxiden sind Polyglycidylether von phenolischen Novolakharzen. Sie werden durch Einwirken von Formaldehyd auf Phenole im molaren Verhältnis von 1:0,5 bis 0,8 unter sauren Bedingungen kondensiert und anschließend mit Epichlorhydrin umgessetzt. Sie haben ein Epoxid-Äquivalentgewicht von 150 bis 300, bevorzugt 170 bis 210 und enthalten etwa 2 bis 4 Glycidyl-gruppen pro Molekül. Bei diesem Harzsystem ist zu berücksichtigen, daß es im allgemeinen eine höhere durchschnittliche Molmasse hat, beispielsweise zwischen 474 und 3 000.
Als Polyepoxide können auch Polyglycidylether von Polyaminen wie N.N-Diglycidylanilin oder N.N.Nʹ.Nʹ-Tetraglycidyl-4.4ʹ-diaminodiphenylmethan oder epoxidierte Aminomethyldiphenyloxide verwendet werden.Für das erfindungsgemäße Verfahren werden Polyglycidylether bevorzugt, die keine zusätzlichen Aminogruppen enthalten.

Als Epoxidharze werden auch estergruppenfreie, epoxidgruppenhaltige aliphatische oder cycloaliphatische Kohlenwasserstoffe verstanden, die durch Epoxidierung mit Persäuren hergestellt werden. Beispiele hierfür sind epoxidierte Polybutadienöle, Vinylcyclohexendioxid oder Bis-(2.3-epoxycyclopentyl)ether.

Zum Defunktionalisieren der Polyepoxidharze werden diese in einem ersten Reaktionsschritt mit monofunktionellen Alkyl- oder Alkylarylverbindungen R-X-H umgesetzt, deren wasserstoffreaktive Gruppen mit Oxirangruppen reagieren unter Bildung einer nicht oder schwer verseifbaren Bindung -X-. Sie ist beispielsweise eine -O-, -S-, -NR- (wobei R wie nachstehend für die Formal R-X-H angegeben, definiert ist), -CONH- oder -COO-Gruppe. Mit der Gruppe R wird ein endständiger, elastifizierender aliphatischer Kohlenwasserstoffrest gegebenenfalls über einen aromatischen Ring in das Molekül eingeführt. Er kann linear, verzweigt oder cyclisch,gesättigt oder ungesättigt sein, zusätzlich Ethergruppen in der Kette oder im Cyclus enthalten und besteht aus 2 bis 20, bevorzugt 4 bis 18 Kohlenstoffatomen. Er kann durch Hydroxyl- oder Alkoxygruppen mit 1 bis 4 Kohlenstoffatomen substituiert sein. Wenn R einen Alkylarylrest darstellt, so handelt es sich bei der darin enthaltenen Arylgruppe um einen Benzol- oder Naphthalinrest, jeweils substituiert mit 1 bis 3 der vorstehend für R genannten Alkylreste.

Um eine Molekülaufspaltung bei der Polyaminumsetzung zu vermeiden, darf das modifizierende Epoxidharz keine leicht hydrolysierbaren Gruppen enthalten. Bilden sich bei der Reaktion Ester- oder Amidgruppen, so muß daher die modifizierende Verbindung so ausgewählt werden, daß sie durch ihren chemischen Aufbau beispielsweise durch sterische Hinderung schwer verseifbar wird. Typische Beispiele für geeignete monofunktionelle Modifizierungsmittel sind sekundäre Dialkylamine, wie Di-n-butylamin oder N-Methyl-N-dodecylamin, sekundäre Aminoalkohole wie Diethanol-amin oder N-Methyl-N-dodecylamin, sekundäre Aminoalkohole wie Diethanol-amin oder N-Methylethyl-hexylamin, aber auch cyclische Amine wie Morpholin oder Oxazolidin. Weiter finden Verwendung Alkylmercaptane wie Laurylmercaptan oder tertiär-Butyl-thio-kresol, Monocarbonsäuren wie tertiär-Butylbenzoesäure, Cyclohexan-monocarbonsäure oder besser α-substituierte-Alkylcarbonsäuren wie Versaticsäure oder Dimethylol-propionsäure, Carbonsäureamide wie Kokosfettsäureamid oder Monoalkohole wie Dodecylalkohol, Fu furol oder Benzylalkohol. Der Einsatz von sekundären Aminen bzw. Aminoalkoholen führt zu tertiären Aminogruppen, deren Einsatz weitgehend vermieden werden soll.

Besonders gute Eigenschaften werden erhalten mit Monophenolen, die mit einem oder mehreren, gesättigten oder ungesättigten, linearen, verzweigten oder cyclischen Alkylresten mit 1 bis 20 Kohlenstoffatomen, besonders 4 bis 16 Kohlenstoffatomen substituiert sind. Längerkettige Alkylreste werden bevorzugt, um eine gewisse Elastifizierung zu erreichen, Beispiele hierfür sind: tertiär-Butylphenol, n-Octylphenol, 2-Ethyl-hexylphenol, n-Dodecylphenol, 2.6-Xylenol, 2-Methyl-4-tertiär-butylphenol, 2.4.6-Trimethylphenol oder Cardanol, das im wesentlichen aus 3-(8.11)-Pentadecandienylphenol besteht.

Die im Epoxidharz vorhandenen Oxirangruppen werden durch Erwärmen mit der monofunktionellen Modifizierungskomponente auf 50 bis 200°C möglichst vollständig umgesetzt, gegebenenfalls unter Zusatz von 0.01 bis 3 Gew.-% Katalysatoren wie Triphenylphosphin, Benzyltrimethylammoniumhydroxid oder geeigneten Phosphoniumverbindungen. Zum Steuern der Reaktion können geeignete nicht reaktive Lösemittel wie aromatische Kohlenwasserstoffe, Alkohole, Ketone, Ethylenglykol- oder Propylenglykolmono- oder -diether zugegebenen werden. Die Mengenverhältnisse werden dabei so ausgewählt, daß bei 100%igem Umsatz noch 0,5 bis 1,2 , bevorzugt 0,8 bis 1,1 Oxirangruppen pro Molekül frei erhalten bleiben. Es wird zweckmäßig eine Oxirangruppe pro Molekül für die weitere Umsetzung mit Polyaminen zur Verfügung gestellt. Ist die Zahl der Oxirangruppen höher als 1, so wird die Aminzahl gesteigert. Liegt sie unter 1, so liegen Moleküle vor, die keine Aminogruppen mehr enthalten. Solche Moleküle sind dann bei der Umsetzung mit Diisocyanaten bzw. bei der Vernetzung mit blockierten Polyisocyanaten unter Urethanbildung in den Molekülverband einbaubar. Die durch die Umsetzung entstehenden sekundären Hydroxylgruppen können teilweise oder vollständig durch Umesterung mit Fettsäuremethylestern oder mit Alkyl- oder Arylmonoisocyanaten verschiedener Kettenlänge umgesetzt werden. Hierzu werden beispielsweise Laurylsäuremethylester, Ölsäuremethylester, Linolsäuremethylester, n-Butylisocyanat, Stearylisocyanat, Cyclohexylisocyanat oder Phenylisocyanat verwendet.

In einem zweiten Reaktionsschritt wird das modifizierte Epoxidharz mit überschüssigem Polyamin mit mindestens zwei primären Aminogruppen, das außer gegebenenfalls sekundären Aminogruppen keine weitere funktionellen Gruppen enthält, die mit Oxirangruppen reagieren können in homogener Phase bei einem Festkörpergehalt von 20 bis 100 Gew.-% umgesetzt. Die Reaktion der Amine beginnt schon bei Raumtempertur und ist im allgemeinen exotherm. Durch Erhöhen der Reaktionstemperatur auf etwa 50 bis 150°C, bevorzugt 60 bis 85°C, ist aus Stabilitätsgründen sicherzustellen, daß nach Reaktionsende keine Epoxidgruppen mehr vorhanden sind. Der Polyaminüberschuß kann umso niedriger sein, je mehr Aminowasserstoffbindungen das Polyamin enthält und je niedriger die Harzkonzentration ist. Mit zunehmender Verdünnung werden Harze mit niedrigerer Molmasse erhalten. Es wird eine Umsetzung von einem Mol Polyamin pro Epoxidgruppe angestrebt. Der Gehalt an primären und sekundären Aminogruppen in der Komponente A , bezogen auf die gesamten basischen Stickstoffatome, sollte möglichst hoch sein. Er liegt über 50%, bevorzugt über 67%, besonders bevorzugt über 90% der Gesamtaminstickstoffmenge. Die Reaktionsführung bei der Umsetzung mit dem Polyamin hat so zu erfolgen, daß der dabei gebildete tertiäre Amingehalt unter 10%, bevorzugt unter 1,0% des Gesamtstickstoffgehaltes fällt. Das wird im wesentlichen durch die Menge an überschüssigem Amin bestimmt, wobei pro Epoxidäquivalent des Harzes 1.1 bis 10 Mol. bevorzugt 1,2 bis 5 Mol, besonders bevorzugt 1,5 bis 3 Mol des Polyamins eingesetzt werden. Um den notwendigen Aminüberschuß zu senken, ist es angebracht, das flüssige Epoxidharz in das vorgelegte Amin zu geben. Geeignete Polyamine enthalten pro Molekül mindestens zwei Aminstickstoffatome und mindestens zwei Kohlenstoffatome zwischen den Aminogruppen, sowie vorzugsweise zwei primäre Aminogruppen mit zusammen mindestens vier Aminwasserstoffatomen. Die Kohlenstoffkette der Amine kann durch Ethergruppen unterbrochen sein. Die Molmasse liegt bevorzugt bei 60 bis 300. Beispiele für geeignete Polyamine sind primäre Alkylendiamine mit mindestens zwei Kohlenstoffatomen, wie Ethylendiamin, die verschiedenen Isomere des Diaminopropans, -butans, -pentans und -hexans, 2-Methylpentandiamin, Trimethylhexamethylendiamin, Isophorondiamin oder 1.4-Diaminocyclohexan sowie andere Alkylenpolyamine wie Diethylentriamin, Triethylentetramin oder Dipropylentriamin, wobei solche Polyamine bevorzugt sind, die nur zwei primäre Aminogruppen enthalten. Besonders geeignet sind solche Polyamine, die das Epoxidgruppen tragende Vorprodukt gut lösen und sich aufgrund ihres niedrigen Siedepunktes besonders leicht wieder abdestillieren lassen.

Um Verfärbungen bzw. Zersetzungserscheinungen zu vermeiden, sollte die Polyaminreaktion bzw. die Destillation unter Sauerstoffausschluß und Temperaturen unter 150°C, bevorzugt unter 100°C gegebenenfalls im Vakuum durchgeführt werden. Wird die Kohlenstoffkette des Polyamins zu lang, so ist die Löslichkeit des Harzes in Wasser eingeschränkt. Es werden Diamine mit einer Molmasse unter 150, bevorzugt unter 100 und einem Siedepunkt bei Normaldruck unter 250, bevorzugt unter 150°C, verwendet.Aminreste kann man auch leicht durch eine Dünnschichtdestillation oder Wasserdampfdestillation entfernen. Sie wird so ausgeführt, daß der Gehalt an freien, nicht umgesetzten Polyaminen soweit wie möglich reduziert wird.

Nach dem in der DE 35 38 548 beschriebenen Verfahren wird das nicht umgesetzte Polyamin durch Kreislaufdestillation in Gegenwart eines geeigneten Harzlösemittels unter Wasserzusatz gegebenenfalls unter verringertem Druck entfernt. Man hält dabei die Reaktionsmischung mindestens 5, vorzugsweise 10°C, über der Siedetemperatur des Wasser-Lösemittel-Azeotrops, damit das zugeführte Wasser sofort aus der Reaktionsmischung geschleppt wird. Um einen hohen Wasserdurchsatz zu erreichen, wird eine möglichst große Wärmemenge zugeführt und die Wassermenge darauf abgestimmt. Der Wasserverbrauch ist abhängig von der Siedepunktdifferenz zwischen dem Polyamin und dem Lösemittel. So verringert sich beispielsweise die zur Entfernung von restlichem Ethylendiamin gebrauchte Wassermenge, wenn man statt Xylol das höher siedende Cumol als Schleppmittel verwendet. Die Destillation mit Wasser wird solange fortgesetzt, bis 100 g des wasserfrei abdestillierten Lösemittels weniger als 10 ml, bevorzugt weniger als 2 ml, 0,1 normale methanolische Salzsäure verbrauchen. Die auf diese Weise erhaltenen Produkte haben keinen Amingeruch und sind praktisch frei von monomeren Polyaminresten, d.h. der Gehalt an monomeren Polyaminen liegt unter 50 ppm, bevorzugt unter 10 ppm. Das Lösemittel wird entweder vor oder nach der Umsetzung mit den Polyamin zugesetzt. Lösemittel, die das Harz homogen lösen und als Schleppmittel geeignet sind, sieden unter atmosphärischem Druck bei 110 bis 270°C, vorzugsweise bei 115 bis 200°C, und sind im allgemeinen mit Wasser nicht vollständig mischbar. Typische Beispiele sind aliphatische und aromatische Kohlenwasserstoffe, bevorzugt alkylsubstituierte Benzole im Siedebereich von 140 bis 180°C, wie Benzol, Toluol, Xylol, Ethylbenzol, Cumol oder Tetralin sowie symmetrische oder asymmetrische Ether mit 6 bis 12 Kohlenstoffatomen, wie Dibutylether, Anisol, Diphenylether, vorzugsweise Alkohole mit 4 bis 8 Kohlenstoffatomen, wie Butanole, Pentanole, Hexanole oder Etheralkohole, wie n-Butoxy-propanol. Aufgrund der niedrigen Viskosität des modifizierten Polyamin-Epoxidharz-Adduktes lassen sich die organischen Lösemittel praktisch vollständig abdestillieren. Sowohl bei den Polyaminen als auch den Lösemitteln können Gemische eingesetzt werden. Es wird jedoch die Verwendung von nur einem Lösemittel und einem Polyamin vorgezogen, deren Siedepunkte relativ weit auseinander liegen sollen, um für den Wiedereinsatz gut aufarbeitbar zu sein.

Für die Umsetzung mit den Epoxidharz-Polyamin-Addukten (Komponente AI) werden als Komponente AII Polyisocyanate oder entsprechende isocyanatgruppenhaltige Prepolymere verwendet. Die organischen Polyisocyanate weisen eine mittlere Molmasse von 112 bis 5.000, bevorzugt 140 bis 1.000, und zweckmäßig eine mittlere Isocyanatfunktionalität von 2 bis 8 auf. Geeignete Polyisocyanate sind beispielsweise Verbindungen der idealisierten Formel

(9) E(N=C=O)ₛ

in welcher
- E: für einen aromatischen, gegebenenfalls mit einem oder mehreren Alkylgruppen substituierten oder Methylenbrücken aufweisenden Kohlenwasserstoffrest mit insgesamt 6 bis 15 Kohlenstoffatomen, einen aliphatischen Kohlenwasserstoffrest mit 2 bis 18, vorzugsweise 6 bis 10 Kohlenstoffatomen, einen cyclischen Kohlenwasserstoffrest mit 6 bis 15 Kohlenstoffatomen oder einen heterocyclischen Ring und
- s: für eine Zahl von 2 bis 4, vorzugsweise 2 bis 3, steht.

Typische Beispiele für derartige Polyisocyanate sind Propylendiisocyanat, Ethylethylendiisocyanat, Dimethylethylendiisocyanat, Trimethylendiisocyanat, Tetramethylendiisocyanat, Pentamethylendiisocyanat, Hexamethylendiisocyanat, Trimethylhexandiisocyanat, 1.12-Dodecandiisocyanat, 1.18-Octadecan-diisocyanat, Cyclopentandiisocyanat, Cyclohexan-1.3- und -1.4-diisocyanat, sowie beliebige Gemische dieser Isomeren, Methylcyclohexandiisocyanat,m- oder p-Tetramethylxyloldiisocyanat,1-Isocyanato-3.3.5-trimethyl-5-isocyanatomethyl-cyclohexan, Perhydro-2.4ʹ-und/oder -4.4ʹ-diphenylmethandiisocyanat, 1.3- und 1.4-Phenylendiisocyanat, 2.4- und 2.6-Toluylendiisocyanat sowie beliebige Gemische dieser Isomeren, Xylylendiisocyanat, Diphenylmethan-2.4ʹ- und/oder -4.4ʹ-Diisocyanat, 3.2ʹ- und/oder 3.4ʹ-Diisocyanato-4-methyldiphenylmethan, Bisphenylendiisocyanat, Naphthylen-1.5-diisocyanat, Triphenylmethan-4.4ʹ.4ʺ-triisocyanat, 2.2ʹ.4.4ʹ-Tetraisocyanato-5.5ʹ-dimethyltriphenylmethan, Diphenyltetraisocyanat oder Naphthyltetraisocyanat. Gemischt aliphatische/aromatische Verbindungen sind auch geeignet. Besonders bevorzugt werden großtechnisch erzeugte Diisocyanate wie Toluylendiisocyanat, Hexandiisocyanat, Isophorondiisocyanat oder Dicyclohexylmethan-diisocyanat.

Außer den beispielhaft genannten, niedermolekularen Polyisocyanaten können auch die in der Polyurethanchemie bekannten höhermolekularen Isocyanat-Polymere auf Basis urethangruppenfreier Polyisocyanate und höhermolekularer Polyhydroxyverbindungen als Polyisocyanatkomponente eingesetzt werden. Zweckmäßig werden hierbei (n + 1) Mol der oben beschriebenen Diisocyanate mit n Mol einer gegenüber Isocyanat reaktiven difunktionellen Verbindung bei Temperaturen von zweckmäßig 50 bis 120°C in der Schmelze oder in Gegenwart inerten Lösemittel umgesetzt, die sowohl niedrigmolekular als auch hochmolekular mit einer Molmasse von 62 bis 5.000, bevorzugt 90 bis 1.000, sein können. Arbeitet man mit einem Überschuß an Diisocyanat, so muß das überschüssige Isocyanat wieder abdestilliert werden. Als niedermolekulare Dialkohole werden zweckmäßig die verschiedenen Isomere von linearen, verzweigten und cyclischen Kohlenstoffverbindungen mit 2 bis 20 Kohlenstoffatomen und zwei sekundären und/oder primären Hydroxylgruppen verstanden. Typische Beispiele hierfür sind Butandiol-1.4, Hexandiol-1.6, Trimethylhexandiol, Bis(hydroxymethyl)cyclohexan, Neopentylglykol, Hydroxypivalinsäureneopentylglykolester ,N-Methyl-diethanolamin oder Bis-ethoxyliertes Bisphenol A. Geeignete höhermolekulare Polyhydroxylverbindungen sind die aus der Polyurethanchemie bekannten Polyesterdiole, Polycaprolactondiole, Polycaprolactamdiole, Polyglykoletherdiole. Verwendet werden können auch langkettige primäre und sekundäre Diamine, wie Hexan-diamin-1.6, Addukte von 2 Mol Glycidylether oder Glycidylester an Hexandiamin, N,Nʹ-Cyanethyl-ethylendiamin oder Bis-N,Nʹ-Cyanethylpolyoxypropylendiamin.

Für die erfindungsgemäße Umsetzung werden bevorzugt Diisocyanate eingesetzt. Es können jedoch auch höherwertige Polyisocyanate, wie sie später bei der Beschreibung des Vernetzers eingesetzt werden, verwendet werden, wenn sie durch geeignete monofunktionelle Verbindungen zu einem Diisocyanat defunktionalisiert werden. Hierzu dienen Monoalkohole oder Monoamine verschiedener Kettenlänge, wie beispielsweise n-Butanol, Isodecanol oder Di-ethylhexylamin oder auch die als Verkappungsmittel später beschriebenen Verbindungen. Je nach Art der Gruppe und der Einbrennbedingungen bleiben die eingeführten organischen Reste als Elastifizierungsmittel erhalten oder führen durch Abspalten der Schutzgruppe zu einem selbstvernetzenden Bindemittel.

Die Umsetzung der modifizierten Epoxidharz-Polyamin-Addukte mit den Polyisocyanaten erfolgt - wie schon beschrieben - in carbonylgruppenhaltigen Lösemitteln oder Lösemittelgemischen, wie Ketonen oder Ketone enthaltenden Lösemitteln. Diese werden nach Reaktionsende gegebenenfalls nach Zusatz der Komponente B direkt abdestilliert und mit geeigneten Lösemitteln verdünnt.

Die Aufspaltung der Aldimin oder Ketimingruppen erfolgt bei Zusatz von Wasser. Das kann vor oder nach dem Zusatz der Komponente B erfolgen. Bei der Hydrolyse vor Zusatz der Komponente B kann es günstig sein, die Wassermenge äquivalent einzusetzen und die Komponente A gegebenenfalls teilweise oder vollständig zu neutralisieren. Die Hydrolyse der Ketimingruppen kann auch automatisch nach Zusatz der Komponente B bei der Dispersionsherstellung erfolgen.

Bei der Verwendung werden beispielsweise 40 bis 95 Gew.-% der vorstehend beschriebenen Harnstoffgruppen enthaltenden Aminoepoxidharze (Komponente A) mit beispielsweise 5 bis 60 Gew.-% carboxylgruppenfreiem Vernetzungsmittel (Komponente B) gemischt und können erfindungsgemäß z.B. in Bindemitteln für die kataphoretische Abscheidung in ET-Bädern (KTL-Bäder) eingesetzt werden. Mischungen von 50 bis 80 Gew.-% Komponente A , mit 20 bis 50 Gew.-% Komponente B werden bevorzugt.

Um bestimmte anwendungstechnische Eigenschaften zu erzielen, kann die Komponente A gegebenenfalls durch bis zu 50 % andere hydroxyl- und tert. Aminogruppen enthaltende Harze ersetzt werden. Hierzu dienen beispielsweise Amino-Epoxidharze aus Epoxidharz auf Basis Bisphenol A, Dialkylaminoalkylamin, Dialkanolamin und Addukte aus 1 Mol Alkandiamin und 2 Mol Glycidylester oder Glycidylether. Diese Harze werden bevorzugt in Mengen unter 30 Gew.-% eingesetzt. Aminoacrylatharze aus beispielsweise Dialkylaminoalkyl(meth)acrylat, Hydroxy(meth)acrylat, Vinylaromaten und verschiedenen (Meth)acrylsäureestern werden bevorzugt in Mengen unter 15 Gew.-% verwendet.

Als Vernetzungsmittel (Komponente B) dienen übliche mit Amino- und/oder Hydroxylfunktionen reaktive Vernetzer, wie sie in der Literatur für solche Zwecke beschrieben werden. Beispiele hierfür sind: Formaldehyd-Kondensationsharze (Harnstoff-, Melamin-, Benzoguanin- oder Phenol-Formaldehydharze), blockierte Polyisocyanate, Harze mit umesterungsfähigen Estergruppen oder Gemischen davon. Das Mischungsverhältnis wird empirisch aus den optimal erreichbaren anwendungstechnischen Eigenschaften bei der gegebenen Einbrenntemperatur bestimmt. Eine Kombination mehrerer Vernetzungssysteme kann in bestimmten Fällen von Vorteil sein. Die Formaldehyd-Kondensationsharze enthalten zur Reaktionsbeschleunigung zweckmäßig blockierte saure Katalysatoren, die entweder in dem Vernetzungsmittel oder dem Basisharz chemisch eingebaut sind, wie z.B. durch Reaktion mit Amidosulfonsäure oder nur zugemischt werden, wie das Morpholinsalz der p-Dodecylbenzolsulfonsäure. Die Komponenten A und B können kalt gemischt oder auch bei erhöhten Temperaturen prekondensiert werden. Dabei reagieren die Komponenten A und B in gewissem Umfang miteinander, ohne daß das Gemisch seine Hitzehärtbarkeit und die Eigenschaft durch Protonisieren mit Säuren wasserlöslich gemacht werden zu können, verliert. Prekondensationen werden zweckmäßig bei etwa 80 bis 150°C mit carboxylgruppenfreien Formaldehyd-Kondensationsharzen solange durchgeführt, bis die ursprüngliche Mischungsviskosität um 10 bis 70% angestiegen ist. Als Komponente B werden bevorzugt vollständig blockierte Polyisocyanate eingesetzt, die gegebenenfalls übliche Katalysatoren enthalten. Für Spezialzwecke kann es günstig sein, die blockierten Polyisocyanate mit bis zu 5 %, bevorzugt unter 3 % umesterungsfähigen Polyestern zu verschneiden.

Die als Vernetzungsmittel eingesetzten Polyisocyanate und/oder isocyanatgruppenhaltigen Prepolymere sind die gleichen, wie sie schon vorstehend für die Komponente AII beschrieben wurden. Sie unterscheiden sich jedoch dadurch, daß sie zweckmäßig im Durchschnitt mehr als zwei reaktive Isocyanatgruppen pro Molekül, die durch Schutzgruppen blockiert sind, für die Vernetzung zur Verfügung stellen.Beispielsweise können Gemische aus drei- und/oder höherwertigen Polyisocyanaten mit difunktionellen isocyanatgruppenhaltigen Prepolymeren verwendet werden.

Das Äquivalentverhälts von primären bzw. sekundären Aminogruppen und Hydroxylgruppen der Komponente A zu den blockierten Isocyanatgruppen der Komponente B liegt im Bereich von 1:0,1 bis 1,5,vorzugsweise bei 1:0,7 bis 1,2, und beträgt besonders bevorzugt 1:1.

Polyisocyanate sind verkappt oder blockiert, wenn sie mit den aktiven Wasserstoffatomen des Basisharzes (Hydroxylgruppen oder Aminwasserstoffgruppen) bei normalen Lagertemperaturen nicht reagieren. Wird der beschichtete Gegenstand jedoch auf eine Temperatur erwärmt, die ausreichend ist, um die Verkappung des Isocyanats aufzuheben, so tritt die Vernetzung bzw. Härtung des Überzugs zu einem schützenden, unlöslichen Film auf. Als verkappte Isocyanate können beliebige Isocyanate verwendet werden, bei denen die Isocyanatgruppen mit einer Verbindung umgesetzt worden ist, die gegenüber aktiven Wasserstoff bei erhöhter Temperatur, in der Regel zwischen etwa 90 und 200°C reagiert. Blockierte Polyisocyanate werden z.B. dadurch hergestellt, daß man ein multifunktionelles Isocyanat mindestens mit einer stöchiometrischen Menge an einer monofunktionellen, aktiven Wasserstoff (Zerewitinoff-Reaktion) enthaltenden Verbindung zweckmäßig bei Temperaturen von 50 bis 80°C umsetzt, wobei gegebenenfalls übliche Katalysatoren, wie basische Katalysatoren, wie tertiäre Amine oder geringe Mengen an Zinnsalzen, wie Dibutylzinndilaurat, zugegeben werden können. Die Isocyanatgruppe wird auf diese Weise bei Raumtemperatur gegen Reaktionen mit Wasser oder Alkoholen geschützt. Sie spaltet sich bei Einbrenntemperaturen von weniger als 210°C, vorzugsweise weniger als 190°C, besonders unter 180°C, andererseits über 110°C, vorzugsweise über 140°C, besonders bevorzugt über 150°C, wieder ab, damit die freiwerdende Isocyanatgruppe mit dem Basisharz reagieren kann.

Als Polyisocyanate sind besonders gut die sogenannten "Lackpolyisocyanate" geeignet, die aus bekannten Diisocyanaten hergestellt werden. So entsteht aus Hexandiisocyanat und Wasser das Tris-(6-isocyanatohexyl)-biuret. Durch Trimerisation von Hexandiisocyanat erhält man Tris-(6-isocyanatohexyl)-isocyanurat, gegebenenfalls im Gemisch mit seinen höheren Homologen, sowie weiteren aus Isophorondiisocyanat, Diisocyanatotoluol oder Gemischen aus Diisocyanatotoluol und Hexamethylendiisocyanat aufgebauten Isocyanuratgruppen aufweisenden Polyisocyanaten. Sehr gut einsetzbare Polyisocyanate sind auch die Urethangruppen aufweisenden Polyisocyanate, die beispielsweise durch Umsetzung von überschüssigen Mengen an 2.4-Diisocyanatotoluol mit einfachen, mehrwertigen Alkoholen der Molmasse 63 bis 300, insbesondere Trimethylolpropan und gegebenenfalls destillative Entfernung des nicht umgesetzten Diisocyanatüberschusses erhalten werden können. So werden beispielsweise blockierte Triisocyanate oder blockierte höhermolekulare Reaktionsprodukte von Triisocyanaten mit Dialkoholen besonders bevorzugt. Bei dieser Umsetzung werden zweckmäßig ungefähr folgende Molverhältnisse eingehalten:
Triisocyanat: Diol: Schutzgruppe wie 3y : (y-1) : (y+2), wobei y = 1 bis 6, bevorzugt 2 bis 3 ist. Mittel, die die Isocyanate blockieren, enthalten nur eine einzige Amin-, Amid-, Imid-, Lactam-, Thio- oder Hydroxylgruppe. Im allgemeinen werden flüchtige, aktiven Wasserstoff enthaltende Verbindungen mit niedrigen Molmassen, vorzugsweise von nicht mehr als 300, mehr bevorzugt von nicht mehr als 200, verwendet. So haben sich beispielsweise bewährt, aliphatische oder cycloaliphatische Alkohole, wie n-Butanol, 2-Ethylhexanol, Cyclohexanol, Phenole, tertiär-Butylphenole, Dialkylaminoalkohole wie Dimethylaminoethanol, Oxime wie Methylethylketoxim, Lactame wie ε-Caprolactam oder Pyrrolidon-2, Imide wie Phthalimid oder N-Hydroxy-maleinimid, Hydroxyalkylester, Malonsäure- oder Acetessigsäureester. Es werden aber auch β-Hydroxyglykole oder -glykolether und Glykolamide empfohlen. Oxime und Lactone sind als Verkappungsmittel von besonderem Interesse, weil die damit verkappten Polyisocyanate bei relativ niedrigen Temperaturen reagieren. Zur Blockierung können auch mehr als eine Art von Schutzgruppe, bevorzugt solche mit unterschiedlicher Reaktivität, verwendet werden. Es ist so beispielsweise möglich ein Gemisch von zwei oder mehreren unterschiedlich blockierten Polyisocyanaten zu verwenden oder ein Polyisocyanat einzusetzen, das mit zwei oder mehreren unterschiedlichen Schutzgruppen blockiert ist.

Besonders vorteilhaft ist die Verwendung eines blockiertem Polyisocyanatgemisches aus möglichst niedrigmolekularen Polyisocyanaten mit drei und mehr Isocyanatgruppen und linearen isocyanatgruppenhaltigen Reaktionsprodukten mit eines mittleren Molekulargewicht von 500 bis 5000, bevorzugt 800 bis 2000 aus (cyclo)aliphatischen Dialkanolen und/oder N-Alkyl-dialkanolen und (cyclo)aliphatischen Diisocyanaten, bevorzugt aliphatischen C4 bis C18 Dialkanolen, N-Methyl- oder N-Ethyl-dialkanolamin, wie N-Methyl diethanolamin oder aliphatischen Diisocyanaten, wie Hexandiisocyanat.

Das blockierte Polyisocyanat (Komponente B) wird im allgemeinen durch das neutralisierte Aminoepoxidharz stabil in der wäßrigen Dispersion einemulgiert gehalten. Bei relativ hohen Mengen ist es jedoch nützlich, in das blockierte Polyisocyanat basische Stickstoffatome einzubauen. Das geschieht beispielsweise durch Reaktion der Isocyanate mit tertiären Aminogruppen enthaltenden Polyalkoholen wie N-Methyl-diethanolamin, Triethanolamin oder tertiäre Aminogruppen enthaltenden Polyaminen wie 3-(Methyl)-3-(2-aminoethyl)-aminopropylamin. Während hierbei eine Molekülvergrößerung auftritt, kann die Blockierung der Isocyanatgruppe auch mit monofunktionellen Verbindungen mit tertiären Amino-Gruppen erfolgen. Hierzu dienen beispielsweise N-Dialkyl-aminoalkohole wie Dimethyl-aminoethanol oder N.N-Dialkyl-alkylendiamine wie Dimethylaminopropylamin oder N.N-Diethyl-N'-methyl-1.3-ethandiamin.

Es ist nicht notwendig, separate Vernetzer zuzusetzen, weil die Vernetzerfunktion auch in das erfindungsgemäße Kunstharz eingebaut werden kann und es damit selbstvernetzend wird. Das kann beispielsweise dadurch erfolgen, daß man die Komponente A, AI oder ein Vorprodukt davon mit einem teilgeblockten Polyisocyanat umsetzt, welches im Mittel noch etwa eine freie Isocyanatgruppe im Molekül enthält. Als Verkappungsmittel dienen die gleichen, wie sie für das vollblockierte Polyisocyanat Verwendung findin. Eine andere Möglichkeit, das erfindungsgemäße Kunstharz selbstvernetzend zu machen, besteht in der Umsetzung eines Teils der primären Aminogruppen mit Alkylencarbonaten zu β-Hydroxyalkylcarbamaten, die in üblicher Weise durchgeführt werden kann.

Die Vernetzung der Harnstoffgruppen enthaltenden Aminoepoxidharze mit blockierten Polyisocyanaten kann gegebenenfalls durch Zusatz von 0,01 bis 2 Gew.-%, speziell 0,5 bis 1 Gew.-%, bezogen auf Festharz an Katalysatoren, wie stark basischer tertiärer Amine und/oder aktiver Metallverbindungen beschleunigt werden. Eine besondere, manchmal synergistische Wirkung wird erreicht durch die Kombination von basischem Medium der abgeschiedenen Harze und den Metallsalzen von Wismut, Blei, Kobalt, Eisen, Antimon und/oder Zinn-II und Zinn-IV-Verbindungen. Besonders bevorzugt werden Katalysatoren wie Eisen-III-acetylacetonat, Zinkacetylacetonat, Dibutylzinn-dilaurat, Di-n-butyl-zinnoxid, Dibutyl-zinn-dioctyl-maleat, Zinnoctoat, Zinn-oleat, Tetrabutyltitanat und/oder Cobalt-2-ethylhexanoat. Bevorzugt sind Katalysatoren, die im EC-Bad nur bedingt löslich sind und sich in fein verteilter Form mit dem Lack elektrophoretisch abscheiden und im Film ohne Verlaufsstörungen beim Einbrennen gleichmäßig verteilen lassen. Sind ungesättigte Doppelbindungen im Harz enthalten, so können auch die üblichen Metallsikkative gegebenenfalls in Emulsionsform zur Verbesserung der Härtungseigenschaften zugegeben werden.

Zum Ausbalancieren der anwendungstechnischen Eigenschaften ist es zweckmäßig, daß das kathodisch abscheidbare Harz außer dem Vernetzungsmittel noch zusätzlich bis zu 30 Gew.-%, bevorzugt 5 bis 20 Gew.-%, eines hydroxyfunktionellen Harzes einemulgiert enthält. So können zum Steigern des Umgriffs hydroxyfunktionnelle Harze mit einer Hydroxylzahl von 30 bis 500, speziell 50 bis 300, und einer Molmasse von 300 bis 5.000, speziell 500 bis 3.000, eigesetzt werden. Beispiele für solche Harze sind Styrol-Allylalkohol-Copolymere, hydroxylgruppenhaltige (Meth)-acrylcopolymere, Caprolactonpolyole, Caprolactampolyole, Urethanpolyole, hydroxylgruppenhaltige Polyether und Polyester. Die Harze enthalten eine solche Menge an polaren Gruppen, bevorzugt primären Hydroxylgruppen, daß sie einwandfrei in den neutralisierten, basischen Harzgemisch (Komponente A) einemulgiert sind. Zum Erreichen einer besseren Verträglichkeit und Wasserverdünnbarkeit ist der Einbau einer geringen Aminzahl unter 30, besonders unter 20, möglich. Der Molmassenbereich wird so ausgewählt, daß sie nicht mehr flüchtig sind, jedoch durch eine verbesserte Fließfähigkeit eine gute Filmbildung erzielen. Eine eventuell erfolgende Prekondensation kann in beliebiger Reihenfolge erfolgen.

Durch Protonisieren mit Säuren wird das kationische Bindemittel im Gemisch mit dem Vernetzungsmittel in an sich bekannter Weise wasserverdünnbar gemacht. Beispiele für Säuren sind Ameisensäure, Milchsäure, Essigsäure, Propionsäure, Zitronensäure, Malonsäure, Acrylsäure, Phosphorsäure oder Alkylphosphorsäure. Monobasische niedrigmolekulare organische Carbonsäuren werden bevorzugt. Es muß mindestens so viel Säure zugegeben werden, daß eine stabile Emulsion aus kationischem Bindemittel und Vernetzungsmittel entsteht. Ein Überschuß an Säure, d.h. ein Neutralisationsgrad über 100%, ist zweckmäßig zu vermeiden. Der MEQ-Wert (Milliäquivalente Säure pro 100 g Festharz) liegt im allgemeinen zwischen 20 und 80. Es wird ein möglichst niedriger MEQ-Wert angestrebt, um ein möglichst hohes Abscheideäquivalent zu erhalten.

Die Herstellung besonders lösemittelarmer Emulsionen kann auf folgendem Wege geschehen: Die organische Lösung des Aminoepoxidharzes (Komponente A) wird gegebenenfalls im Gemisch mit der organischen Lösung des Vernetzungsmittels (Komponente B) durch Zugabe von Säuren, wie z.B. Carbonsäuren, wie oben erwähnt, auf einen MEQ-Wert von 15 bis 45 neutralisiert und nach Zusatz von Wasser einer azeotropen Destillation bei Siedetemperatur unterworfen.

Die Destillationstemperatur kann zum Vermeiden von Reaktionen im Vakuum bei etwa 40 bis 60°C liegen. Der Abscheider ist dabei so konstruiert, daß das Wasser in den Kolben zurückfließt und das Lösemittel, beispielsweise Methylisobutylketon, abgetrennt wird. Es ist empirisch auszuprüfen, mit welchen Mengen Neutralisationsmittel und Wasser gearbeitet werden muß, um ein gut zu destillierendes Produkt mit möglichst geringer Schaumneigung zu erhalten. Es lassen sich auf diesem Wege stabile, praktisch lösemittelfreie wäßrige Dispersionen von Bindemitteln herstellen. Ein solches Bindemittel bzw. Überzugsmittel kann aus Verlaufsgründen oder zur Beeinflussung der Schichtdicke mit Lösemittel als Koaleszensmittel in möglichst geringen Mengen wieder versetzt werden. Der Gehalt an organischen Lösemitteln sollte unter 10%, besonders unter 5%, liegen. Als Lösemittel dienen Alkohole, Glykolether, Ketoalkohole, aber auch aliphatische und/oder aromatische kohlenwasserstoffe verschiedener Kettenlänge. Bei der Auswahl muß berücksichtigt werden, daß das Vernetzungsmittel nicht wasserlöslich ist und Anteile von geeigneten Lösemitteln gegebenenfalls den Dispergiervorgang erleichtern und stabilisieren können. Mit steigendem Lösemittelgehalt verschlechtert sich der Umgriff, die abgeschiedene Schichtdicke erhöht sich und es können Überbeschichtungen auftreten. Wasserunlösliche Lösemittel wirken hierbei stärker als wasserlösliche. Zur Verlaufsverbesserung und zum Senken des Schichtwiderstandes kann auch anteilweise ein nicht wasserlösliches, hochsiedendes Lösemittel zugesetzt werden, wie Hexylenglykol, Phenoxyethanol, Ethylhexanol, Isodekanol oder 2.2.4-Trimethylpentadiol-1.3-monoisobutyrat.

Zur Herstellung von Überzugsmitteln bzw. Lacken aus den erfindungsgemäß bereiteten Bindemitteldispersionen ist es möglich, Pigmente, Füllstoffe, Korrosionsinhibitoren und/oder übliche Lackhilfsmittel in üblicher Weise an geeigneter Stelle des Herstellungsverfahrens einzudispergieren.

Der Feststoffgehalt des Überzugsmittels gemäß der Erfindung beträgt nach Verdünnen mit Wasser zweckmäßig 5 bis 60 Gew.-%. Beim Einstellen des Lackes auf einen höheren Festkörper von 25 bis 50 Gew.-%, bevorzugt 30 bis 45 Gew.-%, werden wasserverdünnbare Einbrennlacke erhalten, die durch Tauchen, Spritzen, Walzen usw. auf das zu lackierende Objekt aufgebracht werden können. Verdünnt man dagegen auf einen Festkörper von 5 bis 30 Gew.-%, vorzugsweise 10 bis 20 Gew.-%, so ist der Lack für die elektrophoretische Abscheidung geeignet. Das Bad wird ständig gerührt, um an der Kathodenoberfläche eine gleichmäßige Temperatur aufrechtzuerhalten und das Absetzen der unlöslichen Bestandteile der Dispersion, z.B. der Pigmente, zu verhindern. Der pH-Wert des Lackes liegt im allgemeinen zwischen 4,0 und 8,0, vorzugsweise zwischen 6,0 und 7.5. Liegt der pH-Wert zu niedrig, so ist mit einem Angriff der Säure auf das Eisen von Becken, Rohrleitungen und Pumpen zu rechnen. Die elektrophoretische Abscheidung erfolgt zweckmäßig frühestens 24 Stunden nach Herstellen des Bades. Während dieser Zeit wird zweckmäßig kontinuierlich gerührt, um eine gleichmäßige Verteilung zu erhalten. Als Anode werden elektrisch leitfähige, nicht korrodierende Elektroden, z.B. aus nichtrostendem Stahl oder Graphit verwendet. Der an der Kathode zu beschichtende Gegenstand und die Anode werden, wie für die elektrohporetische Abscheidung bekannt, in ein wäßriges Bad eingetaucht. Es können alle metallisch leitenden Werkstücke beschichtet werden, wie Kupfer, Aluminium, Zinn, Zink, Eisen und Legierungen dieser Metalle. Während des Abscheidens wird das Bad bei Temperaturen von zweckmäßig etwa 15 bis 35°C gehalten. Festkörper, Abscheidungstemperatur und -zeit sowie Spannung werden so gewählt, daß die gewünschte Schichtstärke nach Abspülen mit Ultrafiltrat und/oder Wasser und Einbrennen bei Temperaturen von 130 bis 230°C erhalten wird. So steigt z.B. die Schichtstärke mit zunehmender Beschichtungszeit und Abscheidespannung. Beim Anlegen eines elektrischen Stromes mit einer Spannung von zweckmäßig 50 bis 500 Volt zwischen metallisch leitendem Werkstück und einer Gegenelektrode wird das wasserverdünnbare Basisharz an der Kathode koaguliert. Es transprotiert hierbei das wasserunlösliche Vernetzungsmittel, Pigmente, Katalysatoren usw. mit. Hierbei kann sich das Verhältnis von Pigment zum Kunstharz-Bindemittel im abgeschiedenen Film zugunsten des Pigmentes verschieben. Gleichzeitig werden Wasser und die zur Neutralisation verwendete Säure im Bad angereichert. Zum Nachfüllen müssen daher konzentrierte Lacke verwendet werden, die diese Verschiebung durch geänderte Mengenverhältnisse ausgleichen. Diese Korrektur kann auch durch geeignete apparative Einrichtungen, z.B. Elektrodialyseverfahren oder Ultrafiltration erfolgen.

Erfindungsgemäß ist es auch möglich, ein konzentriertes, mit Wasser zu verdünnendes Bindemittel mit z.B. einem Festkörper von etwa 85 bis 60 Gew.-% bereitzustellen, dieses kann in üblicher Weise mit Kugelmühle, Dreiwalze oder Perlmühle pigmentiert werden. Hierzu können übliche Pigmente, wie sie z.B. in der DIN 55 944 beschrieben werden, Füllstoffe, Korrosionsschutz-Inhibitoren und Lackhilfsmitteln, wie Antikratermittel, Verlaufmittel oder Antischaummittel, verwendet werden Naturgemäß wählt man solche aus, die mit Wasser im sauren bis neutralen Medium keine störenden Reaktionen eingehen, keine wasserlöslichen Fremdionen einschleppen und beim Altern nicht in solcher Form ausfallen, daß sie nicht wieder aufgerührt werden können. Die Lacke sind besonders für die Elektrotauchlackierung von Metallen geeignet und geben nach Einbrennen von bevorzugt 15 bis 45 Minuten bei 140 bis 180°C glattverlaufende Grundierungen mit verbesserter Zwischenhaftung, Elastizität und Steinschlagfestigkeit. Das Pigment-Bindemittelverhältnis ist abhängig von Dispergierfähigkeit und Viskosität des Bindemittels und liegt im allgemeinen zwischen 0,1: 1 und 1,5:1.

Die verschiedenen Zusätze wie die vorstehend erwähnten Pigmente usw., können auf verschiedene Weise in die erfindungsgemäßen Überzugsmittel eindispergiert werden. Es ergeben sich beispielsweise folgende Möglichkeiten:
a) Herstellung der wäßrigen Dispersion der Komponente A vor Zusatz der Komponente B, wobei B zum Herstellen der Pigmentpaste benutzt und anschließend mit A vermischt wird.
b) Herstellen einer wäßrigen Dispersion aus einem Teil der Komponente A nach Zusatz der Komponente B. Eindispergieren der Zusätze in den Rest der Lösung der Komponente A und Vereinigung der Dispersion der Komponente A, der Restlösung der Komponente A und der Lösung von B. In diesem Falle kann die Lösung der Komponente B auch vor Herstellung der abgezweigten Dispersion der Komponente A mit dieser vereint werden und gemeinsam zu einer Dispersion aufbereitet werden.
c) Aufarbeitung der Komponenten A und B getrennt oder gemeinsam zu einer Dispersion, Bereitung einer Pigmentpaste mit den weiteren Zusatzstoffen (beispielsweise mit den vorstehend definierten hydroxyfunktionellen Harzen) und Mischen der Komponenten.
d) Zusatz der Pigemente vor der Herstellung der Dispersion zu A bzw. A + B und anschließende Herstellung der Dispersion. in Gegenwart der Pigement bzw. Zusatzmittel.

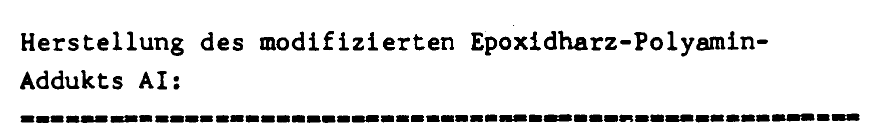

In einem Reaktionskolben mit Rührer, Tropftrichter und Rückflußkühler werden unter Inertgas 582 g Xylol, 1.504 g eines Epoxidharzes auf Basis Bisphenol A mit einem Epoxidharz-Äquivalentgewicht von 188 und 824 g n-Octylphenol auf 100°C erwärmt. Nach Zusatz von 0,8 g einer 50%igen wäßrigen Lösung von Tetrabutylammoniumchlorid wird auf 150°C geheizt und bei dieser Temperatur gehalten, bis das Epoxid-Äquivalentgewicht 640 beträgt. Anschließend wird auf 50°C abgekühlt und ein Gemisch aus 720 g Xylol und 720 g Ethylendiamin zugegeben, wobei die Temperatur der exothermen Reaktion bis auf ca. 105°C ansteigt. Bei dieser Temperatur wird 3 Stunden gehalten, Vakuum angelegt und das überschüssige Ethylendiamin abdestilliert. Es wurden mit Wasserdampf die Aminreste abdestilliert, bis mit dem Destillat nur noch eine Aminzahl von unter 0.3 überging.
- Festkörper:: 93.5 Gew.-% (nach 30 Min Erwärmen auf 180°C)
- Aminzahl :: 177 (mg KOH pro g Festharz)
- Viskosität:: 149 mPa·s (nach Verdünnen auf 50 Gew.-% mit Diethylenglykol-dimethylether bei 25°C)

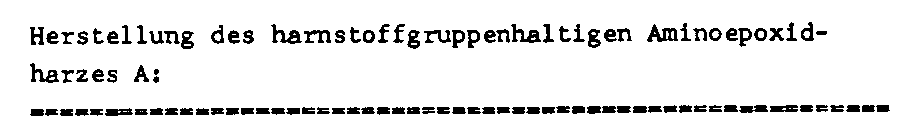

1.000 g des Addukts AI mit einem Festkörpergehalt von 93.5% wurden mit 580 g Methylisobutylketon solange erwärmt, bis mit dem Lösemittel Wasser auskreist. Nach Abtrennen von 26 g Wasser wurde auf 40 bis 45°C abgekühlt und eine Lösung von 244 g Hexandiisocyanat in 488 g trockenem Methyl-isobutylketon über 2 Stunden langsam zugetropft. Anschließend wird auf 80°C erwärmt und diese Temperatur gehalten, bis der NCO-Gehalt 0% beträgt. Das Lösemittel wurde unter Vakuum abdestilliert und mit 150 g Ethoxypropanol verdünnt.
- Festkörper:: 84.7 Gew.-% (nach 30 Min Erwärmen auf 150°C)
- Aminzahl :: 68
- Viskosität:: 590 mPa·s (nach Verdünnen mit Ethoxypropanol auf 50 Gew.-% bei 25°C)

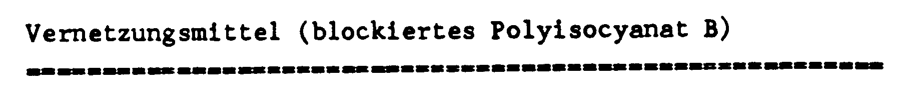

666 g Isophorondiisocyanat und 134 g Trimethylolpropan werden mit 431 g trockenem Ethylglykolacetat gemischt und unter Rühren bei vollständigem Luftfeuchtigkeitsausschluß innerhalb 1 Stunde auf 60°C erwärmt. Das zunächst unlösliche und feste Trimethylolpropan schmilz hierbei und reagiert langsam innerhalb einer weiteren Stunde, wobei die Temperatur auf 90°C erhöht wird. Zum Vervollständigen der Reaktion hält man noch weitere 3 Stunden bei 90°C. Das NCO-Äquivalentgewicht beträgt 410. Dann werden 366 ε-Caprolactam in 3 Stunden so langsam zugegeben, daß die Reaktionstemperatur von 100°C nicht überschritten wird. Es wird solange bei dieser Temperatur gehalten, bis die NCO-Zahl unter 0.1% abgesunkten ist. Man destilliert das Lösemittel unter Vakuum sorgfältig ab und verdünnt mit Butoxyethanol und sek. Butanol im Gew.-Verhältnis 2:5 auf ein Festkörpergehalt von 65 Gew.-%.

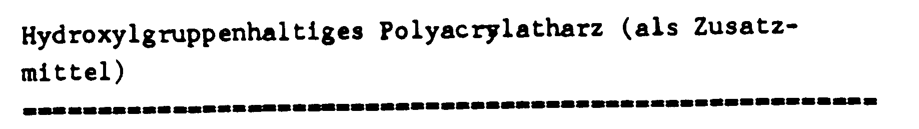

In einem Reaktionskolben mit Rührer, Tropftrichter und Rückflußkühler werden unter Inertgas 370 g Butoxyethanol auf 130°C erwärmt und innerhalb von 4 Stunden gleichmäßig bei dieser Temperatur ein Gemisch von
368 g Hydroxyethylacrylat
736 g Butylacrylat und
9 g tert. Butylperoctoat
zugegeben. Dann 1 Stunde bei 130°C halten und danach auf 110°C abkühlen. Es wird zweimal mit 3 g tert.-Butylperoctoat im Abstand von 2 Stunden nachinitiert und danach 4 Stunden bei 130°C gehalten.
- Festkörper:: 74.2 Gew.-% (30 Min 180°C)
- Viskosität:: 2.4 Pa·s (bei Festkörper)
- Hydroxylzahl:: ca. 160 (mg KOH pro g Festharz)

### Beispiel 1

194.8 g harnstoffgruppenhaltiges Aminoepoxidharz A werden mit 184.6 g blockiertem Polyisocyanat B und 20.2 g des vorstehend erhaltenen hydroxylgruppenhaltigen Polyacrylatharzes gemischt. Nach Zusatz von 4.5 g Ameisensäure (85%ig) wird mit vollentsalztem Wasser auf 2 Liter verdünnt. Badwerte:
- Festkörper:: ca. 15 Gew.-%
- MEQₛ-Wert :: 39.5 (Milliäquivalente pro 100 g Harz)
- pH-Wert :: 7.0
- Badleitfähigkeit:: 1.096 µScm⁻¹

Auf zinkphosphatierten Stahlblechen wird bei 25°C 2 Min bei 280 Volt beschichtet und nach Abspülen mit Wasser der Film 25 Min bei 180°C eingebrannt. Es wird eine Schichtdicke von 18 bis 20 µm gemessen. Die Eigenschaften des Films sind

| | |
|---|---|
| König-Pendelhärte (DIN 53 157) | 210 " |
| Erichsen-Tiefung (DIN 53 156) | 6.5 mm |
| Gitterschnitt (DIN 53 151) | 0 bis 1 |
| Salzsprühnebelprüfung (DIN 50 021) | 480 Stunden |
| Unterwanderung am Schnitt | 0.3 mm |
| Flächenrost | 0 |
| Blasen | mₒ/gₒ (Menge und Größe jeweils Null) |

Das nach der Lackierung verbleibende Bad enthält keine Harzanteile, die einen kontinuierlichen Betrieb durch Anreicherung stören könnten.

## Patentansprüche

1. Wäßriges Überzugsmittel, das ein durch Protonisieren mit Säuren wasserverdünnbares organisches Kunstharz-Bindemittel, enthaltend eine organische Aminogruppen und Hydroxylgruppen enthaltende Kunstharzkomponente und Vernetzungsmittel, sowie gegebenenfalls Vernetzungs-Katalysatoren und gegebenenfalls Pigmente, Füllstoffe, Korrosionsinhibitoren, übliche Lackhilfsmittel sowie gegebenenfalls in einer Menge bis zu 10 Gew.-%, bezogen auf das Gesamtgewicht des Überzugsmittels, organische Lösemittel enthält,
**dadurch gekennzeichnet,**
daß es als Bindemittel enthält:
A) 40 bis 95 Gew.-% eines mindestens eine primäre Aminogruppe und mindestens eine Harnstoffgruppe pro Molekül enthaltenden Aminoepoxidharzes, bei dem es sich um das Hydrolyseprodukt eines Aminoepoxidharzes handelt, wobei das Aminoepoxidharz erhältlich ist durch Reaktion von 90 bis 40 Gew.-% eines Epoxidharz-Polyaminaddukts mit einem Carbonylgruppen enthaltenden Lösemittel unter azeotropem Abdestillieren von Wasser, und anschließende Umsetzung des erhaltenen Iminprodukts mit
10 bis 60 Gew.-% Polyisocyanten oder isocyanatgruppenhaltigen Prepolymeren, wobei sich die Gew.-% des Epoxidpolyaminaddukts und des Polyisocyanats auf 100 % addieren,
wobei das Epoxidharz-Polyaminaddukt mit nicht oder schwer verseifbaren Alkyl- oder Arylresten modifiziert ist und mindestens eine primäre und mindestens eine sekundäre Aminogruppe pro Molekül aufweist;
B) 5 bis 60 Gew.-% eines üblichen mit Aminogruppen und/oder Hydroxylgruppen reaktiven Vernetzungsmittels.

2. Wäßriges Überzugsmittel nach Anspruch 1, dadurch gekennzeichnet, daß das mit Alkyl- oder Aralkylresten modifizierte Epoxidharz-Polyaminaddukt erhalten wurde durch Umsetzung eines Epoxidharzes mit einem Epoxidäquivalentgewicht von etwa 70 bis 500 mit einem Modifizierungsmittel
R-X-H
worin
X -O-, -S-, -NR-, -CONH- oder -COO- ist und
R jeweils eine lineare, verzweigte, cyclische, gesättigte oder ungesättigte Alkylgruppe mit 2-20 Kohlenstoffatomen, die in der Kette bzw. im Cyclus Etherbindungen enthalten kann, und/oder durch Hydroxylgruppen und/oder Alkoxygruppen mit 1 bis 4 Kohlenstoffatomen substituiert sein kann,
oder eine Arylgruppe, insbesondere eine Phenylgruppe ist, die durch 1 bis 3 Alkylgruppen, wie sie vorstehend definiert wurden, substituiert ist;
in einer derartigen Menge, daß 0,5 bis 1,2 Epoxidgruppen pro Molekül frei erhalten bleiben,
und anschließende Umsetzung mit Polyaminen.

3. Wäßriges Überzugsmittel nach Anspruch 2, dadurch gekennzeichnet, daß das Polyamin ein solches mit mindestens zwei primären Aminogruppen und gegebenenfalls sekundären Aminogruppen mit einer Molmasse von 60 bis 300 ist.

4. Wäßriges Überzugsmittel nach einem der Ansprüche 1 bis 3, dadurch gekennzeichnet, daß in der Komponente A) das Polyisocyanat bzw. isocyanatgruppenhaltige Prepolymere ein Diisocyanat ist und mit der Iminkomponente in einem Molverhältnis von x Mol Diisocyanat zu (x +1) Mol Iminkomponente, worin x = 1-6, umgesetzt ist.

5. Wäßriges Überzugsmittel nach einem der Ansprüche 1 bis 4, dadurch gekennzeichnet, daß die Komponente B) eines oder mehrere blockierte Polyisocyanate und/oder isocyanatgruppenhaltige Prepolymere mit im Durchschnitt mehr als zwei blockierten Isocyanatgruppen pro Molekül ist.

6. Wäßriges Überzugsmittel nach einem der Ansprüche 2 bis 5, dadurch gekennzeichnet, daß das Epoxidharz ein flüssiges Reaktionsprodukt von Bisphenol A mit Epichlorhydrin ist, mit einem Epoxidäquivalentgewicht von 170 bis 300.

7. Verfahren zur Herstellung des wäßrigen Überzugsmittels nach Anspruch 1,
**dadurch gekennzeichnet,**
daß man
90 bis 40 Gew.-% eines mit nicht oder schwer verseifbaren Alkyl- oder Alkylarlyresten modifizierten Epoxidharz-Polyaminaddukts mit mindestesn einer primären und einer sekundären Aminogruppe pro Molekül mit einem Carbonylgruppen enthaltenden Lösemittel unter azeotropem Abdestillieren von Wasser umsetzt, und
die erhaltene Lösung mit
10 bis 60 Gew.-% Polyisocyanaten oder isocyanatgruppenhaltigen Prepolymeren versetzt und zur Reaktion bringt (wobei sich die Gew.-% des Epoxidharz-Polyaminaddukts und des Polyisocyanats auf 100% addieren)
worauf man die erhaltene Lösung mit einer Lösung eines amin- und/oder hydroxylgruppenreaktiven Vernetzungsmittels in der zur Erzielung der in Anspruch 1 angegebenen Mengenverhältnisse benötigten Menge versetzt, und entweder vor oder nach der Zugabe des Vernetzungsmittels durch Säurezusatz teil- oder vollneutralisiert,
Wasser zugibt und die enthaltenen Lösemittel durch azeotrope Destillation entfernt.

8. Verfahren nach Anspruch 7, dadurch gekennzeichnet, daß Vernetzungskatalysatoren, Pigmente, Füllstoffe, Korrosionsinhibitoren, übliche Lackhilfsmittel und/oder Lösemittel während oder nach dem Herstellungsverfahren eindispergiert werden.

9. Verwendung des wäßrigen Überzugsmittels nach Anspruch 1 bis 6 bzw. erhalten nach den Ansprüchen 7 und 8 zum elektrophoretischen Beschichten.

## Claims

1. An aqueous coating agent, that contains an organic synthetic resin binder water-dilutable by protonation with acids, the binder containing a synthetic resin component containing organic amino groups and hydroxyl groups and cross-linking agents, as well as optionally cross-linking catalysts and optionally pigments, fillers, corrosion inhibitors, conventional lacquer additives as well as optionally, in an amount of up to 10 wt%, relative to the total weight of the coating agent, of organic solvents, characterized in that it contains as binder:
A) 40 to 95 wt% of an aminoepoxy resin containing at least one primary amino group and at least one urea group per molecule, this being the hydrolysis product of an amino epoxy resin, wherein the aminoepoxy resin is obtainable by reaction of 90 to 40 wt% of an epoxy resinpolyamine adduct with a solvent containing carbonyl groups while distilling off water azeotropically and subsequent reaction of the imine product obtained with
10 to 60 wt% of polyisocyanates or prepolymers containing isocyanate groups, the percentages by weight of the epoxide-polyamine adduct and the polyisocyanate totalling 100 %,
the epoxy resin-polyamine adduct being modified with non- or difficultly-saponifiable alkyl or aryl groups and having at least one primary and at least one secondary amino group per molecule; and
B) 5 to 60 wt% of a conventional cross-linking agent reactive with amino groups and/or hydroxyl groups.

2. An aqueous coating agent according to Claim 1, characterized in that the epoxy resin-polyamine adduct modified with alkyl or aryl groups has been obtained by reaction of an epoxy resin with an epoxide equivalent weight of about 70 to 500 with a modifying agent
R-X-H
wherein
X is -O-, -S-, -NR-, -CONH- or -COO- and
R in each case a linear, branched, cyclic, saturated or unsaturated alkyl group with 2-20 carbon atoms, that can contain ether bonds in the chain or in the ring, and/or can be substituted by hydroxyl groups and/or alkoxy groups with 1 to 4 carbon atoms,
or an aryl group, in particular a phenyl group, that is substituted by 1 to 3 alkyl groups as defined above;
in such an amount that 0.5 to 1.2 free epoxide groups per molecule survive,
and subsequent reaction with polyamines.

3. An aqueous coating agent according to Claim 2, characterized in that the polyamine is one with at least two primary amino groups and optionally secondary amino groups with a molecular weight of 60 to 300.

4. An aqueous coating agent according to one of Claims 1 to 3, characterized in that in Component A) the polyisocyanate or prepolymer containing isocyanate groups is a diisocyanate and is reacted with the imine component in a molecular ratio of x mol diisocyanate to (x+1) mol imine component, wherein x = 1-6.

5. An aqueous coating agent according to one of Claims 1 to 4, characterized in that Component B) is one or more blocked polyisocyanates and/or prepolymers containing isocyanate groups with on average more than two blocked isocyanate groups per molecule.

6. An aqueous coating agent according to one of Claims 2 to 5, characterized in that the epoxy resin is a liquid reaction product of bisphenol A with epichlorohydrin, with an epoxide equivalent weight of 170 to 300.

7. A process for the production of the aqueous coating agent according to Claim 1, characterized in that
90 to 40 wt% of an epoxy resin-polyamine adduct modified with non- or difficultly-saponifiable alkyl or alkylaryl groups with at least one primary and one secondary amino group per molecule is reacted with a solvent containing carbonyl groups while distilling off water azeotropically, and
10 to 60 wt% of polyisocyanates or prepolymers containing isocyanate groups (the percentages by weight of the epoxy resin-polyamine adduct and the polyisocyanate totalling 100 %) is added to the solution obtained, which is caused to react
whereupon to the solution obtained is added a solution of a cross-linking agent with amine and/or hydroxyl reactive groups in the amount required to achieve the proportions indicated in Claim 1, and either before or after the addition of the cross-linking agent the solution is partially or fully neutralized by the addition of acid,
water is added and the solvent obtained removed by azeotropic distillation.

8. A process according to Claim 7, characterized in that cross-linking catalysts, pigments, fillers, corrosion inhibitors, conventional lacquer additives and/or solvents are dispersed during or after the production process.

9. The use of the aqueous coating agent according to Claims 1 to 6 or obtained according to Claims 7 and 8 for electrophoretic coating.

## Revendications

1. Produit de revêtement aqueux, qui contient un liant de résine synthétique organique diluable à l'eau après protonisation par des acides, contenant un composant résine synthétique à groupes amino et hydroxy organiques et un agent réticulant, et le cas échéant des catalyseurs de réticulation et le cas échéant des pigments, des matières de charge, des inhibiteurs de corrosion, des produits auxiliaires usuels pour peintures et vernis et le cas échéant, en quantité allant jusqu'à 10 % en poids, par rapport au poids total du produit de revêtement, des solvants organiques, caractérisé en ce qu'il contient en tant que liant :
A) 40 à 95 % en poids d'une résine aminoépoxydique contenant au moins un groupe amino primaire et au moins un groupe urée par molécule, cette résine consistant en le produit d'hydrolyse d'une résine aminoépoxydique, la résine aminoépoxydique étant obtenue par réaction de 90 à 40 % en poids d'un adduct résine époxydique-polyamine avec un solvant contenant des groupes carbonyle, avec distillation azéotropique de l'eau, et réaction subséquente du produit iminé ainsi obtenu avec
10 à 60 % en poids de polyisocyanates ou de prépolymères contenant des groupes isocyanate, la somme des % en poids de l'adduct époxydepolyamine et du polyisocyanate étant égale à 100 %,
l'adduct résine époxy-polyamine étant modifié par des groupes alkyle ou aryle insaponifiables ou difficilement saponifiables et contenant au moins un groupe amino primaire et au moins un groupe amino secondaire par molécule ;
B) 5 à 60 % en poids d'un agent réticulant usuel, réactif avec les groupes amino et/ou les groupes hydroxy.

2. Produit de revêtement aqueux selon la revendication **1**, caractérisé en ce que l'adduct résine époxydique-polyamine modifié par des radicaux alkyle ou aralkyle a été obtenu par réaction d'une résine époxydique ayant un poids équivalent d'époxyde d'environ 70 à 500 avec un agent modifiant :
R-X-H
dans lequel :
X représente -O-, -S-, -NR-, -CONH- ou -COO-, et
R représente un groupe alkyle linéaire, ramifié, cyclique, saturé ou insaturé en C₂-C₂₀ pouvant contenir des liaisons éther dans la chaîne ou le cycle, et/ou pouvant être substitué par des groupes hydroxy et/ou des groupes alcoxy en C₁-C₄,
ou un groupe aryle, en particulier un groupe phényle qui peut être substitué par 1 à 3 groupes alkyle tels que définis ci-dessus ;
en quantité telle que 0,5 à 1,2 groupes époxyde restent libres par molécule, en faisant suivre d'une réaction avec des polyamines.

3. Produit de revêtement aqueux selon la revendication **2**, caractérisé en ce que la polyamine contient au moins deux groupes amino primaires et le cas échéant des groupes amino secondaires et a une masse moléculaire de 60 à 300.

4. Produit de revêtement aqueux selon l'une des revendications **1** à **3**, caractérisé en ce que, dans le composant A), le polyisocyanate ou le prépolymère à groupes isocyanate est un diisocyanate et est mis à réagir avec le composant iminé à un rapport molaire de x mol de diisocyanate pour (x + 1) mol du composant iminé, x allant de 1 à 6.

5. Produit de revêtement aqueux selon l'une des revendications **1** à **4**, caractérisé en ce que le composant B) consiste en un ou plusieurs polyisocyanates et/ou prépolymères à groupes isocyanate bloqués avec en moyenne plus de deux groupes isocyanate bloqués par moléculaire.

6. Produit de revêtement aqueux selon l'une des revendications **2** à **5**, caractérisé en ce que la résine époxydique est un produit de réaction liquide du bisphénol A et de l'épichlorhydrine, à un poids équivalent d'époxyde de 170 à 300.

7. Procédé de préparation du produit de revêtement aqueux selon la revendication **1**, caractérisé en ce que :
- on fait réagir 90 à 40 % en poids d'un adduct résine époxydiquepolyamine modifié par des groupes alkyle ou alkylaryle insaponifiables ou difficilement saponifiables et ayant au moins un groupe amino primaire et un groupe amino secondaire par molécule, avec un solvant contenant des groupes carbonyle, avec distillation azéotropique de l'eau, et
- on ajoute à la solution obtenue
- 10 à 60 % en poids de polyisocyanates ou de prépolymères contenant des groupes isocyanate et on fait réagir (la somme des % en poids de l'adduct résine époxydique-polyamine et du polyisocyanate étant égale à 100 %)
- après quoi on ajoute à la solution obtenue une solution d'un agent réticulant réactif avec les groupes amino et/ou hydroxy, en quantité nécessaire pour respecter les proportions relatives indiquées dans la revendication **1**, et soit avant soit après l'addition de l'agent réticulant, on neutralise en totalité ou en partie par addition d'un acide,
- on ajoute de l'eau et on élimine le solvant contenu par distillation azéotropique.

8. Procédé selon la revendication **7**, caractérisé en ce que l'on introduit et l'on disperse les catalyseurs de réticulation, les pigments, les matières de charge, les inhibiteurs de corrosion, les produits auxiliaires usuels de l'industrie des peintures et vernis et/ou les solvants durant ou après les opérations de préparation.

9. Utilisation du produit de revêtement aqueux selon les revendications **1** à **6**, ou obtenu selon les revendications **7** et **8**, pour des revêtements par électrophorèse.
